Europäisches Patentamt

(19) European Patent Office

Office européen des brevets

(11) Publication number: **0 286 001 B1**

(12) # EUROPEAN PATENT SPECIFICATION

(45) Date of publication of patent specification :
31.07.91 Bulletin 91/31

(51) Int. Cl.⁵ : **C08F 10/02, C08F 4/685**

(21) Application number : 88105187.4

(22) Date of filing : 30.03.88

(54) Process for the production of polyethylene having an intermediate molecular weight distribution.

(30) Priority : 31.03.87 US 32356

(43) Date of publication of application :
12.10.88 Bulletin 88/41

(45) Publication of the grant of the patent :
31.07.91 Bulletin 91/31

(84) Designated Contracting States :
AT BE CH DE ES FR GB GR IT LI LU NL SE

(56) References cited :
EP-A- 0 120 501
FR-A- 2 355 562
FR-A- 2 428 056
CHEMICAL ABSTRACTS, vol. 91, 1979, page
16, abstract no. 75112a, Columbus, Ohio, US; &
JP-A-79 56 994 (ASAHI CHEMICAL INDUSTRY
CO. LTD) 08-05-1979

(73) Proprietor : UNION CARBIDE CORPORATION
39 Old Ridgebury Road
Danbury Connecticut 06817 (US)

(72) Inventor : Nicoletti, James William
23 Michael Street
Piscataway, NJ 08854 (US)
Inventor : Cann, Kevin Joseph
27 Bedle Street
Belle Mead, NJ 08502 (US)
Inventor : Karol, Frederick John
18 Hiland Drive
Belle Mead, NJ 08502 (US)

(74) Representative : Barz, Peter, Dr. et al
Patentanwälte Dipl.-Ing. G. Dannenberg Dr. P.
Weinhold, Dr. D. Gudel Dipl.-Ing. S. Schubert,
Dr. P. Barz Siegfriedstrasse 8
W-8000 München 40 (DE)

**Description**

This invention relates to a process for the polymerization of ethylene whereby an intermediate molecular weight distribution is achieved.

Titanium and vanadium based ethylene polymerization catalysts have been known and successfully used for many years as well as mixtures of the two see e.g. US-A-4303771, EP-A-120501 and FR-A-2355562. The former produces resins of narrow molecular weight distribution whereas the latter, resins having broad molecular weight distribution. A mixed catalyst system having an intermediate molecular weight distribution in tandem with a high level of activity has, however, been elusive.

An object of this invention, then, is to provide a process for the polymerization of ethylene utilizing mixed titanium and vanadium based catalysts whereby a resin of intermediate molecular weight distribution is produced and the mixed catalyst system achieves a high level of activity.

According to the present invention, a process for the production of polyethylene having an intermediate molecular weight distribution has been discovered comprising passing ethylene into contact with a mixed catalyst system comprising

(a) a titanium based catalyst having the formula $Mg_aTi(OR)_bX_c(ED)_d$ wherein R is an aliphatic or aromatic hydrocarbon radical having 1 to 14 carbon atoms or COR′ wherein R′ is an aliphatic or aromatic hydrocarbon radical having 1 to 14 carbon atoms ; each OR group is alike or different ; X is Cl, Br, or I, or mixtures thereof ; ED is an electron donor, which is a liquid Lewis base in which the precursors of the titanium based catalyst are soluble ; a is 0.5 to 56 ; b is 0, 1, or 2 ; c is 2 to 116 ; and d is greater than 1.5 a + 2 ;

(b) the reaction product of a vanadium compound and an electron donor, which is a liquid Lewis base in which the vanadium compound is soluble,

with the proviso that, where the promoter referred to below contains fluorine, the molar ratio of titatium to vanadium is in the range of 0.33 : 1 to 3 : 1 and, where the promoter des not contain fluorine, the molar ratio of titatium to vanadium is in the range of 0,25 : 1 to 0,5 : 1 ;

(c) a modifier having the formula $MX_a$ wherein M is boron or $AIR_{(3-a)}$ ; each R is an alkyl radical having 1 to 14 carbon atoms and is alike or different ; X is chlorine, bromine, or iodine ; and a is 0, 1, or 2 except that, when M is boron, a is 3 ;

(d) a hydrocarbyl aluminum cocatalyst ; and

(e) a halocarbon promoter having the formula $R_xCX_{(4-x)}$ wherein R is hydrogen or an unsubstituted or halo substituted alkyl radical having 1 to 6 carbon atoms ; each R is alike or different ; X is Cl, Br, I, or F ; each X is alike or different ; and x is 0, 1, or 2 provided that, if no F is present, x is 2,

said contact between ethylene and the catalyst system being made in such a manner that polyethylene is formed.

The titanium based catalyst and its method for preparation are disclosed in US-A-4303771 issued on December 1, 1981. The vanadium based catalyst and its method for preparation are disclosed in US-A-4508842 issued on April 2, 1985.

The titanium compound, which can be used in the above preparations, has the formula $Ti(OR)_aX_b$ wherein R, OR and X are as defined for component (a)(i) above ; a is 0, 1 or 2 ; b is 1 to 4 ; and a + b is 3 or 4. Suitable compounds are $TiCl_3$, $TiCl_4$, $Ti(OC_6H_5)Cl_3$, $Ti(OCOCH_3)Cl_3$ and $Ti(OCOC_6H_5)Cl_3$.

The magnesium compound has the formula $MgX_2$ wherein X is as defined for component (a)(i) above. Suitable examples are $MgCl_2$, $MgBr_2$, and $MgI_2$. Anhydrous $MgCl_2$ is a preferred compound. 0.5 to 56, and preferably 1 to 10, moles of the magnesium compound are used per mole of titanium compound.

The electron donors used in the catalyst systems are organic compounds, liquid at temperatures in the range of 0°C to 200°C. They are also known as Lewis bases. The titanium, magnesium, and vanadium compounds are all soluble in the electron donor.

Electron donors can be selected from the group consisting of alkyl esters of aliphatic and aromatic carboxylic acids, aliphatic ketones, aliphatic amines, aliphatic alcohols, alkyl and cycloalkyl ethers, and mixtures thereof, each electron donor having 2 to 20 carbon atoms. Among these electron donors, the preferred are alkyl and cycloalkyl ethers having 2 to 20 carbon atoms ;

dialkyl, diaryl, and alkylaryl ketones having 3 to 20 carbon atoms ; and alkyl, alkoxy, and alkylalkoxy esters of alkyl and aryl carboxylic acids having 2 to 20 carbon atoms. The most preferred electron donor is tetrahydrofuran. Other examples of suitable electron donors are methyl formate, ethyl acetate, butyl acetate, ethyl ether, dioxane, di-n-propyl ether, dibutyl ether, ethyl formate, methyl acetate, ethyl anisate, ethylene carbonate, tetrahydropyran, and ethyl propionate.

Examples of the vanadium compounds which are of interest here are vanadium trihalides wherein the halide is Cl, Br, or I, or mixtures thereof, $VCl_4$, $VOCl_3$, triisobutyl vanadate, and vanadium tris-acetyl acetonate. Other suitable vanadium compounds are mentioned in United States patents 3,956,255 and 4,370,455.

The modifier has the formula $MX_a$ where M is boron or $AlR_{(3-a)}$ ; each R is an alkyl radical having 1 to 14 carbon atoms and is alike or different ; X is chlorine, bromine, or iodine ; and a is 0, 1, or 2 except that, when M is boron, a is 3. Preferred modifiers include alkylaluminum mono- and di-chlorides wherein each alkyl radical has 1 to 6 carbon atoms, and boron trichloride. A particularly preferred modifier is diethyl aluminum chloride. 0.1 to 10 moles, and preferably 0.2 to 2.5 moles, of modifier are used per mole of electron donor. When the modifier is used it is considered to be part of the titanium and/or vanadium complex.

The hydrocarbyl aluminum cocatalyst can be represented by the formula $R_3Al$ wherein each R is an alkyl, cycloalkyl, aryl, or hydride radical ; at least one R is a hydrocarbyl radical ; two or three R radicals can be joined in a cyclic radical forming a heterocyclic structure ; each R can be alike or different ; and each R, which is a hydrocarbyl radical, has 1 to 20 carbon atoms, and preferably 1 to 10 carbon atoms. Further, each alkyl radical can be straight or branched chain and such hydrocarbyl radical can be a mixed radical, i.e., the radical can contain alkyl, aryl and/or cycloalkyl groups. Examples of suitable radicals are : methyl, ethyl, propyl, isopropyl, butyl, isobutyl, tert-butyl, pentyl, neopentyl, hexyl, 2-methylpentyl, heptyl, octyl, isooctyl, 2-ethylhexyl, 5,5-dimethylhexyl, nonyl, decyl, isodecyl, undecyl, dodecyl, phenyl, phenethyl, methyloxyphenyl, benzyl, tolyl, xylyl, naphthyl, naphthal, methylnaphthyl, cyclohexyl, cycloheptyl, and cyclooctyl.

Examples of hydrocarbyl aluminum compounds are as follows : triisobutylaluminum, trihexylaluminum, diisobutylaluminum hydride, dihexylaluminum hydride, isobutylaluminum dihydride, hexylaluminum dihydride, diisobutylhexylaluminum, isobutyl dihexylaluminum, trimethylaluminum, triethylaluminum, tripropylaluminum, triisopropylaluminum, tri-n-butylaluminum, trioctylaluminum, tridecylaluminum, tridodecylaluminum, tribenzylaluminum, triphenylaluminum, trinaphthylaluminum, and tritolylaluminum. The preferred hydrocarbyl aluminums are triethylaluminum, triisobutylaluminum, trihexylaluminum, di-isobutylaluminum hydride, and dihexylaluminum hydride.

The halocarbon promoter can have the following formula :

$$R_xCX_{(4-x)}$$

wherein R is hydrogen or an unsubstituted or halo substituted alkyl radical having 1 to 6 carbon atoms ; each R is alike or different ; X is Cl, Br, I, or F ; each X is alike or different ; and x is 0, 1, or 2 provided that, if no F is present, x is 2. Suitable promoters are $CH_2Cl_2$, $CFCl_3$, $CH_2BrCl$, and $ClCF_2CCl_3$ ; of which difluorotetrachloroethane and methylene dichloride are preferred.

While it is not necessary to support the catalysts mentioned above, supported catalysts do provide superior performance and are preferred. Silica is the preferred support. Other suitable inorganic oxides are aluminum phosphate, alumina, silica/alumina mixtures, silica modified with an organoaluminum compound such as triethylaluminum, and silica modified with diethylzinc. A typical support is a solid, particulate porous material essentially inert to the polymerization. It is used as a dry powder having an average particle size of 10 to 250 μm (microns) and preferably 30 to 100 μm (microns) ; a surface area of at least about 3 square meters per gram and preferably at least about 50 square meters per gram ; and a pore size of at least 8 nm (80 Angstroms) and preferably at least 10 nm (100 Angstroms). Generally, the amount of support used is that which will provide 0.05 to 0.5 millimole of vanadium per gram of support and preferably 0.2 to 0.3 millimole of these metals per gram of support. Impregnation of the abovementioned catalysts into, for example, silica is accomplished by mixing the complex and silica gel in the electron donor solvent followed by solvent removal under reduced pressure.

The titanium based catalyst and the vanadium based catalyst can be either added separately to the polymerization reactor or dry blended together prior to addition. Premixing outside of the reactor is accomplished by physically blending the two catalysts in an inert atmosphere. The titanium and vanadium catalyst components can also be impregnated on a common support.

The modifier, cocatalyst, and promoter can be added to the complexes either before or during the polymerization reaction. The modifier is usually introduced into the vanadium complex prior to the introduction of the vanadium complex into the mixed catalyst system. The cocatalyst and promoter are preferably added separately neat or as solutions in an inert solvent, such as isopentane, to the polymerization reaction at the same time as the flow of the ethylene is initiated.

Useful molar ratios are about as follows :

| Titanium based catalyst | Broad | Preferred |
|---|---|---|
| 1. Mg:Ti | 0.5:1 to 56:1 | 1.5:1 to 5:1 |
| 2. Mg:X | 0.005:1 to 28:1 | 0.075:1 to 1:1 |
| 3. Ti:X | 0.01:1 to 0.5:1 | 0.05:1 to 0.2:1 |
| 4. Mg:ED | 0.005:1 to 28:1 | 0.15:1 to 1.25:1 |
| 5. Ti:ED | 0.01:1 to 0.5:1 | 0.1:1 to 0.25:1 |
| 6. modifier:Ti | 0.5:1 to 50:1 | 1:1 to 5:1 |

| Vanadium based catalyst | Broad | Preferred |
|---|---|---|
| 1. V:ED | 0.05:1 to 10.:1 | 0.2:1 to 0.5:1 |
| 2. modifier:V | 0.1:1 to 100:1 | 1:1 to 10:1 |

| Mixed Catalyst System | | Preferred |
|---|---|---|
| 1. Ti:V where promoter contains fluorine | | 0.33:1 to 3:1 |

| Mixed Catalyst System | Broad | Preferred |
|---|---|---|
| Ti:V where promoter does not contain fluorine | | 0.25:1 to 0.5:1 |
| 2. cocatalyst:Ti | 0.1:1 to 200:1 | 10:1 to 100:1 |
| 3. cocatalyst:V | 0.1:1 to 200:1 | 10:1 to 100:1 |
| 4. promoter:Ti | 0.1:1 to 200:1 | 10:1 to 100:1 |
| 5. promoter:V | 0.1:1 to 200:1 | 10:1 to 100:1 |
| 6. ED:Al | 0.05:1 to 25:1 | 0.2:1 to 5:1 |

The ethylene polymerization can be conducted in the gas phase or liquid phase using conventional techniques such as fluidized bed, slurry, or solution processes. A continuous, fluidized bed process is preferred. Using the fluidized bed process, the mixed catalyst, the cocatalyst, the promoter, the ethylene monomer, and any comonomers are continuously fed into the reactor and polyethylene product is continuously removed. The density of the ethylene copolymer produced may be varied over a wide range depending upon the amount of alpha-olefin comonomer added and upon the particular comonomer employed. The greater the mole percent of alpha-olefin comonomer, the lower the density.

The fluidized bed polymerization is conducted at a temperature below the sintering temperature of the product. The operating temperature is generally in the range of 10°C to 115°C. Preferred operating temperatures will vary depending upon the density desired. High density polyethylenes of greater than 0.94 grams per cubic centimeter (g/cm³) are produced at operating temperatures of 85°C to 115°C, and preferably 90°C to 100°C. Low density polyethylenes ranging in density from 0.91 to 0.94 g/cm³ are preferably produced at an operating temperature of 75°C to 90°C. Very low density polyethylenes of less than 0.91 g/cm³ are preferably produced at an operating temperature of 10°C to 80°C. In the case of very low density polyethylenes, it is necessary to dilute the reaction mixture with a large quantity of a diluent gas in order to prevent the formation of polymer agglomerates and sustain polymerization on a continuous basis.

The fluidized bed reactor is typically operated at pressures of up to 7 MPa (1,000 psig) and preferably 445 to 2514 KPa (50 to 350 psig).

The use of more than one reactor, connected in series, enhances the intermediate molecular weight distribution.

A chain transfer agent, such as hydrogen, can be used to terminate the polymer chain. Usually the ratio of hydrogen to ethylene will vary between 0.001 to 2.0 moles of hydrogen per mole of ethylene.

The use of a mixed catalyst system in a single reactor or in a series of reactors allows for complete tailoring of the resin molecular weight distribution to suit product applications.

The invention is illustrated by the following examples :

## Examples 1 to 8

The titanium based catalyst used in the examples is prepared according to the procedure described in United States patent 4,303,771. In a 12 liter flask equipped with a mechanical stirrer is placed 41,8 grams (0.439 mole) of anhydrous $MgCl_2$ and 2,5 liters of tetrahydrofuran. To this mixture, 27.7 grams (0.184 mole) $TiCl_4$ is added over 30 minutes while stirring. During this period, the mixture is heated to 60°C to completely dissolve the material.

Porous silica (500 grams dehydrated at 800°C) is added to the solution and stirred for 15 minutes. The mixture is dried with a nitrogen purge at 60°C for 3 to 5 hours to provide a free-flowing powder having the particle size of the silica. The supported precursor is then slurried in anhydrous isopentane and treated with tri-n-hexylaluminum (modifier) using a molar ratio of 3.2 Al/Ti. The mixture is stirred at ambient temperature for 30 minutes and then dried under a purge of dry nitrogen at 65°C until the solvent is removed. The resulting catalyst is a free-flowing powder containing 0.23 millimole Ti per gram ; a molar ratio of Mg : Ti of 3 : 1 ; a molar ratio of Ti : Cl of 0.1 : 1 ; a molar ratio of Al : Ti of 3.1 : 1 ; and a molar ratio of tetrahydrofuran : Al of 5 : 1.

The vanadium based catalyst used in the examples is prepared according to the procedure described in US-A-4508842. To a flask containing 4 liters of anhydrous tetrahydrofuran are added 38 grams of $VCl_3$ (0.242 mole). The mixture is stirred for 5 hours at 65°C under a nitrogen blanket until the $VCl_3$ is dissolved. To this solution is added 800 grams of silica (dehydrated by heating to 600°C). Stirring is continued for 4 hours at 65°C. The flask is vented and the solution is dried at 70°C to the mud stage. The temperature is dropped to 45°C and a nitrogen purge is used until a 4 to 10 percent by weight tetrahydrofuran level is reached in the resulting precursor. The vanadium compound so produced is a free-flowing solid containing 0.3 millimole of vanadium per gram of vanadium compound. The solid is removed from the flask and stored under nitrogen.

To a flask containing 4 liters of anhydrous isopentane are added 500 grams of the vanadium compound. To this mixture is added, with stirring, a 25 weight percent solution of diethylaluminum chloride (DEAC) in anhydrous hexane. The DEAC is referred to as a modifier and is employed in an amount sufficient to provide a final dry catalyst composition containing 3 percent aluminum by weight. This mixture is heated to 45°C and purged with nitrogen until the product is a free-flowing powder containing 0.27 millimole of V per gram and a molar ratio of DEAC to V of 4.1 : 1. The vanadium precursor is then removed from the flask and stored under nitrogen.

These two catalysts are mixed together prior to addition to the polymerization reactor by dry blending in an inert atmosphere. The titanium based catalyst has loadings of 0.22 to 0.26 millimole of titanium per gram of catalyst while the vanadium based catalyst has metal loadings of 0.17 to 0.27 millimole of vanadium per gram of catalyst. The titanium based catalyst and the vanadium based catalyst are both deactivated by contact with atmospheric water and oxygen so it is necessary to perform the blending operation in a dry and non-reactive gas such as nitrogen. A glove box containing the dry, inert gas is ideal. Each catalyst is separately weighed using an analytical balance and then the catalysts are dry blended together by stirring with a spatula and shaking the mixture in a sealed bottle. The mixture is visually homogeneous. The catalyst mixture is as air sensitive as the individual components and is stored and handled in an inert atmosphere.

The polymerization of ethylene is conducted in a one liter autoclave equipped with a mechanical overhead stirrer and an external temperature regulating jacket. The autoclave is capable of providing the continuous addition of ethylene at a fixed preset pressure. The reactor is fitted with thermocouples to allow monitoring of the temperature of the external jacket and the internal temperature of the reactor during the polymerization. The ethylene feed line to the reactor is fitted with an electronic gas flow meter to allow the continuous monitoring of the ethylene flow to the reactor. All manipulation of the polymerization reaction components are conducted using airless techniques to rigorously exclude atmospheric oxygen and water.

The reactions are conducted in a slurry of dry, deoxygenated hexane. The autoclave is charged with 500 milliliters of hexane and 20 milliliters of 1-hexene.

At a temperature of 40°C, a solution of 25 weight percent triisobutylaluminum in hexane (based on the weight of the hexane) is added by syringe to the reactor in a molar ratio of Al : Ti + V of 40 : 1. The aluminum alkyl acts as a cocatalyst for both the titanium based catalyst and the vanadium based catalyst and, by adding the aluminum alkyl to the reactor first, it can scavenge any trace impurities. The addition of the catalysts to the reactor is made with the careful exclusion of air from the system.

The promoter is then charged into the reactor as a one molar hexane solution. It is added by syringe with, as before, precautions being taken to exclude air from the reactor system.

The reactor is sealed immediately following the addition of the last component and is then heated to 60°C. The reactor is then flushed with hydrogen and then pressurized with hydrogen to 108 to 170 KPa gauge (1 to 10 psig). Hydrogen is added to regulate the polymer molecular weight. Heating is continued to 75°C at which point the reactor is pressurized with ethylene to a pressure of 825 to 1204 KPa gauge of (105 to 160 psig). The ethylene flow into the reactor is monitored with a mass flowmeter and the internal and jacket temperatures of the reactor are continuously monitored during the polymerization reaction. The jacket temperature is regulated to maintain the internal temperature of the reactor at 85°C.

The polymerization is conducted for 30 minutes. At that time the ethylene flow to the reactor is stopped, the reactor is vented to ambient pressure, and the jacket is flushed with cold water to bring the internal temperature to ambient as quickly as possible. The polymer/hexane slurry is removed from the reactor, stabilizers are added, and the solvent is allowed to evaporate overnight. The polymer is dried in a vacuum oven at 80°C and then weighed to determine the polymer yield.

Variables and results are shown in the Table.

Notes with respect to the Table :

1. The weight ratio of the Ti catalyst to V catalyst is the weight ratio of the titanium based catalyst to the vanadium based catalyst.

2. mmol = millimole

3. The polymer yield is the amount of polyethylene isolated after the reaction.

4. The _activity_ of the catalyst is measured in grams of polyethylene per millimole of titanium plus vanadium per hour per 690 KPa (100 psi) of ethylene.

5. The theoretical activity is based on the molar ratio of the mixed catalysts and their activities when run independently with the promoter present. It is calculated as follows : Theoretical activity of the mixed catalyst is equal to

$$\frac{(\text{mmol Ti})(\text{Ti catalyst activity}) + (\text{mmol V}) \underline{(\text{V catalyst activity})}}{\text{mmol Ti} + \text{mmol V}}$$

wherein Ti catalyst activity = activity of reaction run with Ti catalyst alone and
V catalyst activity = activity of reaction run with V catalyst alone.

Examples of individual catalyst activity from which theoretical activity values are calculated :

| promoter | Ti catalyst activity | V catalyst activity |
|---|---|---|
| difluorotetrachloroethane | 1800 | 5000 |
| methylene dichloride | 5200 | 2600 |

6. MI = Melt index : ASTM D-1238, Condition E. Measured at 190°C and reported as grams per 10 minutes.

7. MFR = Melt flow ratio : Ratio of Flow Index to Melt Index. FI = Flow index : ASTM D-1238, Condition F. Measured at 10 times the weight used in the melt index test above. Typical single catalyst MFR's are as follows :

Ti catalyst = 22 to 32 at 0.1 to 10 MI

V catalyst = 83 at 0.1 MI
= 65 at 1 MI
= 48 at 10 MI

Table

| Example | Weight ratio of Ti catalyst to V catalyst | Ti (mmol) | V (mmol) | Promoter | Polymer yield (grams) | Activity | Theoretical Activity | MI | MFR | kPa | H2 (psi) | kPa | Ethylene (psi) |
|---|---|---|---|---|---|---|---|---|---|---|---|---|---|
| 1 | 1:1 | 0.0250 | 0.022 | $ClCF_2CCl_3$ | 87 | 2700 | 3150 | 1.41 | 40 | 69.0 | (10) | 1103 | (160) |
| 2 | 1:2 | 0.0120 | 0.030 | $CH_2Cl_2$ | 59 | 2700 | 3000 | 0.28 | 59 | 6.9 | (1) | 724 | (105) |
| 3 | 1:2 | 0.011 | 0.028 | $CH_2Cl_2$ | 54 | 2800 | 3000 | 0.45 | 44 | 34.5 | (5) | 724 | (105) |
| 4 | 1:2 | 0.0079 | 0.019 | $CH_2Cl_2$ | 72 | 3600 | 3000 | 1.90 | 65 | 6.9 | (1) | 1034 | (150) |
| 5 | 1:2 | 0.008 | 0.020 | $CH_2Cl_2$ | 65 | 3100 | 3000 | 0.10 | 64 | 6.9 | (1) | 1034 | (150) |
| 6 | 1:3 | 0.0098 | 0.036 | $CH_2Cl_2$ | 57 | 2400 | 2850 | 0.40 | 60 | 6.9 | (1) | 724 | (105) |
| 7 | 1:3 | 0.0068 | 0.025 | $CH_2Cl_2$ | 80 | 3200 | 2850 | 0.16 | 69 | 6.9 | (1) | 1103 | (160) |
| 8 | 1:3 | 0.0051 | 0.019 | $CH_2Cl_2$ | 51 | 2800 | 2850 | 0.14 | 59 | 6.9 | (1) | 1034 | (150) |

## Claims

1. A process for the production of polyethylene comprising passing ethylene with or without at least one alpha-olefin comonomer, under polymerization conditions, into contact with a mixed catalyst system comprising

(a) a titanium based catalyst having the formula $Mg_aTi(OR)_bX_c(ED)_d$ wherein R is an aliphatic or aromatic hydrocarbon radical having 1 to 14 carbon atoms or COR′ wherein R′ is an aliphatic or aromatic hydrocarbon radical having 1 to 14 carbon atoms ; each OR group is alike or different ; X is Cl, Br, or I, or mixtures thereof ; ED is an electron donor, which is a liquid Lewis base in which the precursors of the titanium based catalyst are soluble ; a is 0.5 to 56 ; b is 0, 1, or 2 ; c is 2 to 116 ; and d is greater than 1.5 a + 2 ;

(b) the reaction product of a vanadium compound and an electron donor, which is a liquid Lewis base in which the vanadium compound is soluble ;

with the proviso that, where the promoter referred to below contains fluorine, the molar ratio of titanium to vanadium is in the range of 0.33 : 1 to 3 : 1 and, where the promoter does not contain fluorine, the molar ratio of titanium to vanadium is in the range of 0.25 : 1 to 0.5 : 1 ;

(c) a modifier having the formula $MX_a$ wherein M is boron or $AIR_{(3-a)}$ ; each R is an alkyl radical having 1 to 14 carbon atoms and is alike or different ; X is chlorine, bromine, or iodine ; and a is 0, 1, or 2 except that, when M is boron, a is 3 ;

(d) a hydrocarbyl aluminum cocatalyst ; and

(e) a halocarbon promoter having the formula $R_xCX_{(4-x)}$ wherein R is hydrogen or an unsubstituted or halo substituted alkyl radical having 1 to 6 carbon atoms ; each R is alike or different ; X is Cl, Br, I, or F ; each X is alike or different ; and x is 0, 1, or 2 provided that, if no F is present, x is 2.

2. The process defined in claim 1 wherein the promoter is $ClCF_2CCl_3$ or $CH_2Cl_2$.

## Patentansprüche

1. Verfahren zur Herstellung von Polyethylen, umfassend das Inkontaktbringen von Ethylen, mit oder ohne mindestens einem α-Olefin-Comonomer, unter Polymerisationsbedingungen mit einem gemischten Katalysatorsystem, welches umfaßt

(a) einen Katalysator auf Titanbasis der Formel $Mg_aTi(OR)_bX_c(ED)_d$, worin R ein aliphatischer oder aromatischer Kohlenwasserstoffrest mit 1 bis 14 Kohlenstoffatomen oder COR′ ist, worin R′ einen aliphatischen oder aromatischen Kohlenwasserstoffrest mit 1 bis 14 Kohlenstoffatomen bedeutet ; jede OR-Gruppe gleich oder verschieden ist ; X Cl, Br oder I oder Mischungen davon darstellt ; ED einen Elektronendonor repräsentiert, der eine flüssige Lewis-Base ist, in der die Vorläufer des Katalysators auf Titanbasis löslich sind ; a 0,5 bis 56 ist ; b 0, 1 oder 2 ist ; c 2 bis 116 ist ; und d größer als 1,5 a + 2 ist ;

(b) das Reaktionsprodukt einer Vanadiumverbindung und eines Elektronendonors, welcher eine flüssige Lewis-Base ist, in der die Vanadiumverbindung löslich ist ;

mit der Maßgabe, daß wenn der unten genannte Promotor Fluor enthält, das Molverhältnis von Titan zu Vanadium im Bereich von 0,33 : 1 bis 3 : 1 liegt, und wenn der Promotor kein Fluor enthält, das Molverhältnis von Titan zu Vanadium im Bereich von 0,25 : 1 bis 0,5 : 1 liegt ;

(c) ein Modifizierungsmittel der Formel $MX_a$, worin M Bor oder $AlR_{(3-a)}$ ist ; jedes R einen Alkylrest mit 1 bis 14 Kohlenstoffatomen darstellt und gleich oder verschieden ist ; X Chlor, Brom oder Iod darstellt ; und a 0, 1 oder 2 ist, mit der Ausnahme daß, wenn M Bor darstellt, a gleich 3 ist ;

(d) einen Hydrocarbylaluminium-Cokatalysator ; und

(e) einen Halogenkohlenstoff-Promotor der Formel $R_xCX_{(4-x)}$, worin R Wasserstoff oder einen unsubstituierten oder mit Halogen substituierten Alkylrest mit 1 bis 6 Kohlenstoffatomen darstellt ; jedes R gleich oder verschieden ist ; X Cl, Br, I oder F ist ; jedes X gleich oder verschieden ist ; und x 0, 1 oder 2 bedeutet, mit der Maßgabe, daß wenn kein F anwesend ist, x gleich 2 ist.

2. Verfahren nach Anspruch 1, worin der Promotor $ClCF_2CCl_3$ oder $CH_2Cl_2$ darstellt.

**Revendications**

1. Procédé de production de polyéthylène, qui consiste à faire passer l'éthylène en présence ou en l'absence d'au moins un comonomère alpha-oléfinique, dans des conditions de polymérisation, au contact d'un système catalyseur mixte comprenant

(a) un catalyseur à base de titane répondant à la formule $Mg_aTi(OR)_bX_c(ED)_d$ dans laquelle R est un radical hydrocarboné aliphatique ou aromatique ayant 1 à 14 atomes de carbone ou un radical COR' dans lequel R' est un radical hydrocarboné aliphatique ou aromatique ayant 1 à 14 atomes de carbone ; les groupes OR sont identiques ou différents ; X représente Cl, Br ou I ou leurs mélanges ; ED est un donneur d'électrons, qui est une base de Lewis liquide dans laquelle les précurseurs du catalyseur à base de titane sont solubles ; a a une valeur de 0,5 à 56 ; b a la valeur 0, 1 ou 2 ; c a une valeur de 2 à 116 ; et d est supérieur à 1,5 a + 2 ;

(b) le produit de réaction d'un composé de vanadium et d'un donneur d'électrons qui est une base liquide de Lewis dans laquelle le composé de vanadium est soluble ;

sous réserve que lorsque le promoteur indiqué ci-dessous contient du fluor, le rapport molaire du titane au vanadium se situe dans la plage de 0,33 : 1 à 3 : 1 et que lorsque le promoteur ne contient pas de fluor, le rapport molaire du titane au vanadium se situe dans la plage de 0,25 : 1 à 0,5 : 1 ;

c) un modificateur répondant à la formule $MX_a$ dans laquelle M est le bore ou un composé $AlR_{(3-a)}$ ; chaque R représente un radical alkyle ayant 1 à 14 atomes de carbone et les radicaux R sont identiques ou différents ; X est le chlore, le brome ou l'iode ; et a la valeur 0, 1 ou 2, sauf lorsque M est le bore, auquel cas a est égal à 3 ;

(d) un co-catalyseur du type hydrocarbylaluminium ; et

(e) un promoteur halogénocarboné répondant à la formule $R_xCX_{(4-x)}$ dans laquelle R est l'hydrogène ou un radical alkyle non substitué ou à substituant halogéno ayant 1 à 6 atomes de carbone ; les radicaux R sont identiques ou différents ; X représente Cl, Br, I ou F ; les radicaux X sont identiques ou différents ; et x a la valeur 0, 1 ou 2, sous réserve qu'en l'absence de F, x soit égal à 2.

2. Procédé suivant la revendication 1, dans lequel le promoteur est $ClCF_2CCl_3$ ou $CH_2Cl_2$.